Europäisches Patentamt

European Patent Office

Office européen des brevets

(19)

(11) Veröffentlichungsnummer: **0 071 868**
A2

(12) # EUROPÄISCHE PATENTANMELDUNG

(21) Anmeldenummer: **82106757.6**

(51) Int. Cl.³: **B 23 B 3/06**

(22) Anmeldetag: **27.07.82**

(30) Priorität: **03.08.81 DE 3130701**

(43) Veröffentlichungstag der Anmeldung: **16.02.83**
Patentblatt 83/7

(84) Benannte Vertragsstaaten: **AT CH DE FR GB IT LI**

(71) Anmelder: **EMAG MASCHINENFABRIK GMBH,
Austrasse 24, D-7335 Salach/Württemberg (DE)**

(72) Erfinder: **Hessbrüggen, Norbert, Sudetenstrasse 47/2,
D-7321 Eschenbach (DE)**

(74) Vertreter: **Zmyj, Erwin, Dipl.-Ing., Postfach 95 04 28,
D-8000 München 95 (DE)**

(54) **Frontdrehmaschine.**

(57) Auf einem Spindelstock (2) einer Drehmaschine ist ein Reitstock (6) mittels einer Konsole (7) verschiebbar gehalten, wodurch die Zugänglichkeit von der Frontseite erhalten bleibt und die üblicherweise erforderliche lange Bettführung für den Reitstock entfällt.

Frontdrehmaschine

Die Erfindung bezieht sich auf eine Drehmaschine mit einem Spindelstock und einem Reitstock.

Bei den bekannten Drehmaschinen ist der Reitstock auf einem Bett verschiebbar und feststellbar angeordnet, dessen Führungsbahnen achsparallel zur Spindel der Drehmaschine verlaufen. Dieses Bett weist eine gewisse Länge auf, die so groß ist, daß die Zugänglichkeit der Maschine von vorne nicht mehr gegeben ist.

Aufgabe der Erfindung ist es eine Reitstockanordnung zu schaffen, die eine Zugänglichkeit von der Frontseite zur Spindel der Drehmaschine bzw. zum Spannfutter der Spindel gestattet.

Diese Aufgabe wird ausgehend von der Drehmaschine der eingangs erläuterten Art erfindungsgemäß dadurch gelöst, daß der Reitstock an einer am Spindelstock verschiebbar geführten Konsole gehalten ist.

Durch diese Ausgestaltung wird erreicht, daß die bisher erforderliche lange Bettführung für den Reitstock entfällt, so daß die Zugänglichkeit von der Frontseite aus ermöglicht wird. Dies erleichtert nicht nur das Beschicken der Maschine von Hand sondern ermöglicht auch die Verbindung mit einer automatischen Ladevorrichtung, z. B. einem Ladeportal, eine automatische Werkstückhandhabung in einfacher Weise.

0071868

Diese automatische Werkstückhandhabung wird dann besonders vereinfacht, wenn in weiterer Ausgestaltung der Erfindung die Konsole auf dem Spindelkasten verschiebbar geführt ist. Auf diese Weise ist die Zugänglichkeit von beiden Seiten über einen sehr großen Bereich möglich, der nur durch die Konsole, welche verhältnismäßig schmal gehalten werden kann, eingeschränkt ist.

Bei einem Drehautomaten mit mehreren Spindeln können alle den Spindeln zugeordneten Reitstöcke an einer gemeinsamen Konsole angeordnet sein.

Die Erfindung ist in der Zeichnung beispielsweise dargestellt. In dieser zeigen:

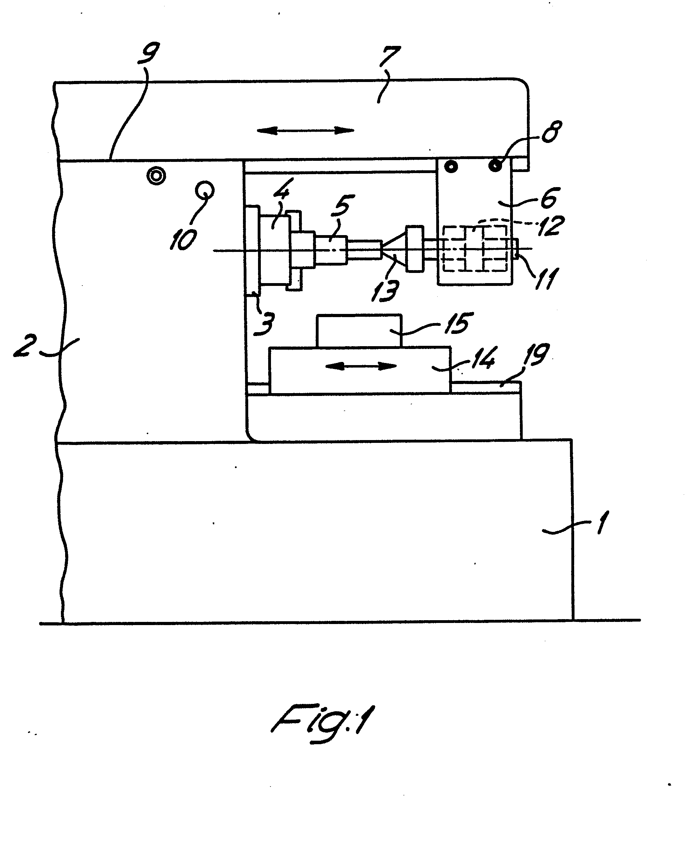

Fig. 1     eine Seitenansicht der erfindungsgemäßen Anordnung des Reitstockes an einer Drehmaschine und

Fig. 2     eine Ansicht von vorne auf die Drehmaschine gemäß Fig. 1.

Auf einem Maschinengestell 1 ist ein Spindelstock 2 angeordnet, dessen Spindel 3 ein Spannfutter 4 trägt, in welchem ein Werkstück 5 eingespannt ist, das so weit aus dem Spannfutter 4 hervorsteht, daß es an seinem freien Ende durch einen Reitstock abgestützt werden muß. Zu diesem Zweck ist ein Reitstock 6 an einer Konsole 7 mittels Klemmschrauben 8 festgelegt. Die Konsole 7 ist auf einer Führung 9 auf dem Spindelkasten 2 verschiebbar geführt, wofür eine Verstellspindel 10 vorgesehen ist.

0071868

Der Reitstock 6 trägt eine Pinole 11, die hydraulisch
betätigbar ist und zu diesem Zweck einen doppelseitig
beaufschlagbaren Kolben 12 aufweist, der über entsprechende nicht dargestellte Zu- und Abführungsleitungen so
beaufschlagbar ist, daß die Pinole 11 mit ihrer Spitze
13 gegen das Werkstück 5 zur Abstützung desselben
gefahren und nach endgültiger Bearbeitung desselben
wieder zurückgezogen werden kann.

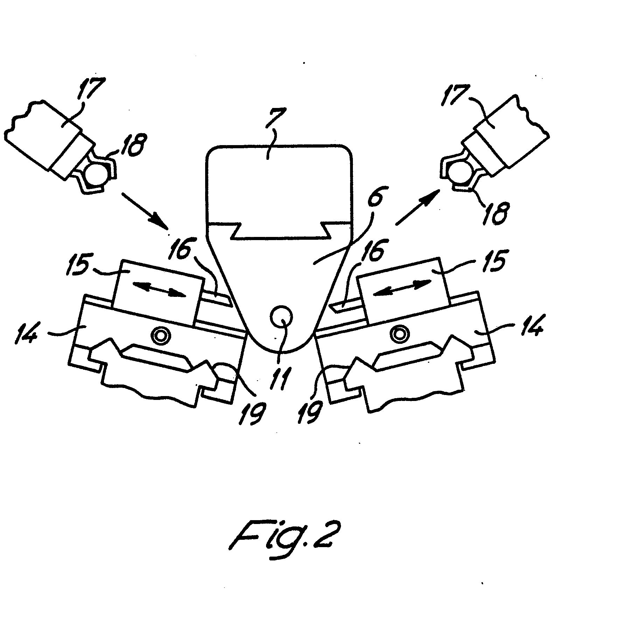

Auf einem quer zur Achse der Spindel 3 verschiebbaren
Schlitten 14 ist ein Werkzeughalter 15 vorgesehen um
das Werkstück 5 bearbeiten zu können. Im dargestellten
Beispiel sind, wie aus Fig. 2 ersichtlich zwei solche
Schlitten 14 mit zwei Werkzeughaltern 15 vorgesehen,
die jeweils ein Werkzeug 16 zum simultanen Bearbeiten
des Werkstückes tragen.

Wie aus Fig. 2 ersichtlich ist trotz der Anordnung der
Konsole 7 und des Reitstockes 6 die Zugänglichkeit
für Greiferarme 17, die mit Greiferfuttern 18 die
Werkstücke herabführen und ins Futter stecken bzw.
nach der Bearbeitung wieder herausnehmen, gegeben.
Mit 19 sind die Bettführungen für die Werkzeugschlitten
bezeichnet.

- 4 -

Patentansprüche

1. Frontdrehmaschine mit einem Spindelstock und einem Reitstock, dadurch g e k e n n z e i c h n e t, daß der Reitstock (6) an einer am Spindelstock (2) verschiebbar geführten Konsole (7) gehalten ist.

2. Frontdrehmaschine nach Anspruch 1, dadurch g e - k e n n z e i c h n e t , daß die Konsole (7) auf dem Spindelstock (2) verschiebbar geführt ist.

3. Frontdrehmaschine nach Anspruch 1 oder 2, dadurch g e k e n n z e i c h n e t , daß bei einem Drehautomaten mit mehreren Spindeln alle den Spindeln zugeordneten Reitstöcke an einer gemeinsamen Konsole angeordnet sind.

0071868

- 1/2 -

Fig.1

Fig.2